# EUROPEAN PATENT SPECIFICATION

(11) **EP 3 312 756 B1**
(45) Date of publication and mention of the grant of the patent: **12.02.2020**
(21) Application number: 17193379.9
(22) Date of filing: 27.09.2017
(51) Int. Cl.: G06F 21/57, H04L 9/00, G06Q 20/38, G06Q 20/40, H04L 29/06, H04L 9/32, H04L 9/08, G06F 21/44, G06F 21/62, G06F 21/73

(54) **ESTABLISHING CRYPTOGRAPHIC IDENTITY FOR AN ELECTRONIC DEVICE**
FESTLEGUNG EINER KRYPTOGRAPHISCHEN IDENTITÄT FÜR EINE ELEKTRONISCHE VORRICHTUNG
ÉTABLISSEMENT D'UNE IDENTITÉ CRYPTOGRAPHIQUE POUR UN DISPOSITIF ÉLECTRONIQUE

(30) Priority: 24.10.2016 GB 201617913; 03.01.2017 GB 201700043
(43) Date of publication of application: 25.04.2018
(73) Proprietor: Trustonic Limited, Cambridge CB1 2JD (GB)
(72) Inventor: EKBERG, Jan-Erik Gustav, Cambridge, CB1 2JD (GB)
(74) Representative: D Young & Co LLP

(56) References cited:
- US-A1- 2015 269 570
- US-A1- 2016 275 461
- US-A1- 2016 300 234
- Saveen . ET AL: "BLOCKCHAIN READY MANUFACTURING SUPPLY CHAIN USING DISTRIBUTED LEDGER", International Journal of Research in Engineering and Technology, 25 September 2016 (2016-09-25), pages 1-10, XP055425640, DOI: 10.15623/ijret.2016.0509001 Retrieved from the Internet: URL:http://esatjournals.net/ijret/2016v05/ i09/IJRET20160509001.pdf [retrieved on 2017-11-17]

## Description

The present technique relates to the field of electronic devices. More particularly, it relates to establishing a cryptographic identity for an electronic device.

Increasingly, electronic devices are being used for processing of potentially sensitive information. For example, it is increasingly common for banking to be carried out using applications running on mobile devices. For a user to be confident that it is safe to use their electronic device for a potentially sensitive application, mechanisms may be provided to establish trust in data or commands received by the device. Similarly, electronic devices, such as sensors in the Internet of Things, may need keys for cryptographically proving their identity to others to ensure trust in the data sent by the sensor. However, establishing device-specific trust roots in a manufacturing setting can be an expensive and cumbersome undertaking.

US 2016/275461 A1 relates to automated attestation of device integrity using the block chain.

US 2016/300234 A1 relates to a system and a method for decentralized title recordation and authentication.

DOI: 10.15623/ijret.2016.0509001 (XP055425640) relates to a blockchain ready manufacturing supply chain using a distributed ledger.

US 2015/0269570 A1 relates to systems and methods in support of the authentication of an item. More specifically, systems and methods for providing authentication of items such as goods, as they are passed through commerce and change ownership are described. The systems and methods certify authenticity of product origin and provide proof of current ownership by creating a publicly verifiable live audit trail using digital signatures, asymmetric (public/secret) key cryptography, an item labeling system, and a mobile authentication client application to capture information about transactions related to an item, perform transactions and record transactions in conjunction with the back end servers.

However, US 2015/0269570 A1 fails to disclose, at least: that the device key is provided in an electronic device in response to acceptance of an ownership taken transaction initiated by a stakeholder establishing the new cryptographic identity; that the acceptance of the ownership taken transaction is dependent on the stakeholder providing a transfer token derived from a previous transaction performed on the electronic device by a previous stakeholder who established a previous cryptographic identity in the chain of cryptographic identities; that in response to acceptance of the ownership taken transaction, data binding identity information indicative of the identity of the stakeholder to the transfer token is uploaded to a public ledger, and that the electronic device maintains a counter for tracking a number of transactions accepted by the electronic device for establishing the chain of cryptographic identities, where the data uploaded to the public ledger in response to acceptance of the ownership taken transaction comprises at least a first value dependent on the transfer token and a given value of said counter and a second value dependent on the identity information and a next value of said counter.

At least some examples provide a method for establishing a new cryptographic identity for an electronic device, the method comprising:
providing in the electronic device at least one device key for encryption or decryption of data or commands or for proving the identity of the electronic device according to the new cryptographic identity; and
uploading, to a public ledger for tracking a chain of cryptographic identities established for said electronic device, information indicative of an identity of a stakeholder establishing the new cryptographic identity and an order in which the new cryptographic identity was established with respect to other cryptographic identities in said chain.

At least some examples provide a computer program for controlling an electronic device to perform the method described above. The computer program may for example be stored on a storage medium. The storage medium may be a non-transitory medium.

At least some examples provide an electronic device comprising circuitry configured to:
provide in the electronic device at least one device key for encryption or decryption of data or commands or for proving the identity of the electronic device according to a new cryptographic identity; and
upload, to a public ledger for tracking a chain of cryptographic identities established for said electronic device, information indicative of an identity of a stakeholder establishing the new cryptographic identity and an order in which the new cryptographic identity was established with respect to other cryptographic identities in said chain.

Further aspects, features and advantages of the present technique will be apparent from the following description of examples, which is to be read in conjunction with the accompanying drawings, in which:
Figure 1 schematically illustrates an example of an electronic device;
Figure 2 schematically illustrates an example of a protected execution environment for protecting secure data and code;
Figure 3 shows an example of establishing cryptographic identities according to a hierarchical chain of trust;
Figure 4 shows an example in which a number of stakeholders independently configure cryptographic identities for the device, and information is uploaded to a public ledger for tracking the identity of the stakeholders and the order in which the cryptographic identities were established;
Figure 5 illustrates the method of establishing cryptographic identities in more detail;
Figure 6 illustrates an example of the flow of tokens and public ledger blocks as successive stakeholders establish cryptographic identities in the device;
Figure 7 illustrates a method of establishing a cryptographic identity for a first stakeholder in the chain;
Figure 8 illustrates a method of executing an ownership taken transaction to establish a new cryptographic identity for an electronic device; and
Figure 9 illustrates a method of executing an ownership release transaction for releasing the electronic device for another stakeholder to establish a further cryptographic identity.

An electronic device may, en route from its initial manufacture to the end user, pass through the hands of several stakeholders (e.g. several parties responsible for different stages of the device manufacture or configuration, or parties responsible for installing software applications or operating systems on the device). Each stakeholder may wish to embed keys defining a cryptographic identity for the device. For example, the keys can be used for authenticating commands to be executed by the device (e.g. commands for providing software updates) or to prove the device's identity to the stakeholder or other parties when the device interacts with them. Typically, this is done by a root stakeholder at the top of the chain taking responsibility for the chain of trust. The root stakeholder guarantees the device identity to stakeholders further down the chain and takes responsibility for authenticating each subsequent stakeholder who wishes to configure the device (with the subsequent stakeholders being authenticated either directly by the root stakeholder or in a delegated manner by the root stakeholder authorising other stakeholders to authenticate further stakeholders on their behalf). However, this approach relies on (a) the root stakeholder being able to authenticate the subsequent stakeholders, and (b) the attestations of the root stakeholder being trusted by other parties. With the advent of the Internet of Things (loT), increasingly there is no longer a clear "computing device manufacturer" as the manufacture of a given end device may be divided into a large number of iterative sourcing steps, and the products provided by a given manufacturer may find their way into a vast array of different products made by different parties. Hence, it may be increasingly difficult for one party to vouch for all subsequent stakeholders who may configure aspects of the device. Also, as the original device manufacturer may be a relatively small-scale outfit, other stakeholders may not be prepared to trust the attestations of such a small-scale manufacturer.

The present disclosure describes a method for establishing a new cryptographic identity for an electronic device, which comprises providing at least one device key for encryption or decryption of data or commands or for proving the identity of the electronic device according to the new cryptographic identity, and uploading, to a public ledger for tracking a chain of cryptographic identities established for said electronic device, information indicative of an identity of a stakeholder establishing the new cryptographic identity and an order in which the new cryptographic identity was established with respect to other cryptographic identities in said chain.

With this approach, it is not necessary for the stakeholder providing the new cryptographic identity to have been authorised by a previous stakeholder, or to have trust that a previous stakeholder has appropriately managed trust in the device up to the point when the current stakeholder has received the device. Different cryptographic identities can be established for the same device completely independently from one another - interaction between stakeholders is not essential. Rather than verification of the chain of trust being implicit from the authentication of one stakeholder by another stakeholder, instead the chain of trust can be verified using a public ledger which tracks the chain of cryptographic identities established for the electronic device. On establishing a new cryptographic identity for the device, information indicative of the identity of the stakeholder establishing that new cryptographic identity and an order in which the identity was established with respect to other cryptographic identities in the chain is uploaded to the public ledger. Hence, the public ledger can later be used if necessary to check that a number of independently-configured cryptographic identities do in fact relate to the same device, and/or identify how the device passed between the different stakeholders who set up the different cryptographic identities.

The public ledger may for example comprise a block chain, a linked list of blocks of data whose validity can be verified by checking the relation between successive blocks in the chain. In some examples, the public ledger may maintain a public component of the device key alongside the ledger entries tracking the stakeholder identities and sequence.

Each block of data on the public ledger may comprise information dependent on a counter maintained by the electronic device for tracking a number of transactions accepted by the electronic device for establishing the chain of cryptographic identities. This allows the sequence of stakeholders to be verified, since a different order of the stakeholders would result in different values of the counter associated with the respective stakeholders' entries in the public ledger. In one example, each block of data on the public ledger comprises information dependent on two successive count values of said counter, so that the forward flowing nature of the chain of blocks included on the public ledger can be proved.

In one example, establishment of the new cryptographic identity may require successful acceptance of an ownership taken transaction initiated by the stakeholder establishing the new cryptographic identity. Hence, when the ownership taken transaction is accepted, the at least one device key is provided in the device (e.g. by injecting one or more externally generated keys or by controlling the device to generate the keys internally). Acceptance of the ownership taken transaction may for example be dependent on certification of the identity of the stakeholder (certification that the stakeholder is actually the party they claim to be, e.g. using a digital certificate or public key infrastructure based mechanism).

Acceptance of the ownership taken transaction may also be dependent on the stakeholder providing a transfer token derived from a previous transaction performed on the electronic device by a previous stakeholder who established a previous cryptographic identity in the chain of cryptographic identities. By making establishment of the new cryptographic identity dependent on the transfer token derived by the previous stakeholder who interacted with the device, this provides a protocol which provides freedom for a given stakeholder to restrict subsequent configuration of the device to particular authorised stakeholders should they wish, but which also allows for stakeholders to configure the device independently without authorisation by the previous stakeholder. If the previous stakeholder wishes to make the device available for general configuration by any subsequent stakeholder (without any interaction between stakeholders), then they can store the transfer token derived from their interaction with the device in a publicly accessible location, e.g. on a server or in a location within storage on the electronic device itself, and on receiving the electronic device, the new stakeholder can then read the transfer token from the publicly accessible location and provide the transfer token when issuing the ownership taken transaction. On the other hand, if the previous stakeholder wishes to restrict subsequent configuration of the device to a particular party, then they can keep the transfer token secret to the public at large, and only provide the transfer token to the particular party or parties they wish to authorise to establish further cryptographic identities on the device. Hence, the use of the transfer token provides the flexibility to support both a hierarchical model in which an earlier stakeholder authenticates a particular subsequent stakeholder, and an independent model where each stakeholder independently configures the device without interaction with the previous stakeholder, with the previous stakeholder selecting which model is used for the next link in the chain depending on how they choose to distribute the transfer token (publicly or privately). In some examples, the transfer token may for example be a random number generated based on some seed information held by the electronic device and the counter discussed above (which tracks the number of accepted transactions), which can make it difficult for a malicious party to guess the transfer token returned for a given link in the chain of trust.

On acceptance of the ownership taken transaction, a block of data binding identity information indicative of the identity of the stakeholder to the transfer token may be uploaded to the public ledger. For example, where a counter for tracking the number of transactions accepted by the electronic device is used as discussed above, the block of data uploaded to the public ledger in response to acceptance of the ownership taken transaction may comprise at least a first value dependent on the transfer token and a given value of the counter; and a second value dependent on the identity information and a next value of the counter.

In some examples, the ownership taken transaction may be the only transaction required for a given stakeholder to establish the cryptographic identity, before passing the device to the next stakeholder in the chain. In this case, the public ledger could comprise one block of data per stakeholder.

However, in some examples, following acceptance of a given ownership taken transaction, acceptance of a subsequent ownership taken transaction may be prohibited until after acceptance of an ownership release transaction. This provides a protocol which allows a given stakeholder to terminate the chain of trust, since if they choose never to issue the ownership release transaction, no subsequent ownership taken transaction will be accepted by the device, and so no other stakeholder can configure further cryptographic identities.

In one example, following acceptance of a given ownership release transaction, the electronic device may be prohibited from using the at least one device key provided in response to said given ownership taken transaction or a previous ownership taken transaction for encryption or decryption of data or commands or for proving the identity of the electronic device, until after acceptance of a subsequent ownership taken transaction. This protects the device against inappropriate use when in transit between stakeholders. Even if a malicious party intercepts the device when travelling between stakeholders, they would not be able to make use of the device's credentials until a subsequent stakeholder has their ownership taken transaction accepted (which may require authentication of the stakeholder's identity).

Acceptance of the ownership release transaction may be dependent on the stakeholder providing at least one of information returned by the electronic device in response to said given ownership taken transaction; and information for proving that a stakeholder initiating the ownership release transaction is the stakeholder who initiated said given ownership taken transaction. This allows the device to check that the party initiating the ownership release transaction is the same stakeholder as the stakeholder who initiated the previous ownership taken transaction (or at least that the party is authorised by that stakeholder), to prevent a malicious party being able to re-start the chain by permitting further cryptographic identities to be established once more, if this is not desired by the most recent stakeholder.

In response to acceptance of the ownership release transaction, the electronic device may return a transfer token to the stakeholder initiating the ownership release transaction, wherein acceptance of a subsequent ownership taken transaction is dependent on provision of the transfer token to the electronic device. Hence, the transfer token described above may be derived from the ownership release transaction. The transfer token may be generated as a function of a counter for tracking a number of transactions accepted by the electronic device for establishing the chain of cryptographic identities.

In one example, in response to acceptance of the ownership release transaction, data binding identity information indicative of the identity of the stakeholder who initiated the ownership release transaction to the transfer token generated in response to the ownership release transaction may be uploaded to the public ledger. This block may be in addition to the block of data uploaded in response to acceptance of the ownership taken transaction (e.g. the public ledger may include at least two blocks per stakeholder). Including the transfer token in the public ledger enables verification of the links between the blocks uploaded during the configuration by one stakeholder and the blocks uploaded by previous or following stakeholders in the chain. If the same stakeholders act in a different sequence, this would result in different data on the block chain.

Again, the data uploaded for the ownership taken transaction may depend on the counter for tracking the number of transactions accepted by the electronic device for establishing the chain of cryptographic identities. For example, the data uploaded to the public ledger in response to acceptance of the ownership taken transaction may comprise at least a first value dependent on the stakeholder identity information and a given value of said the; and a second value dependent on the transfer token and a next value of the counter.

Also, in response to acceptance of the ownership release transaction, information for validating the identity of the stakeholder who initiated the most recent ownership taken transaction may be uploaded to the public ledger. While some identity information dependent on the stakeholder's identity may already have been uploaded to the public ledger in response to the ownership taken transaction, information for processing that identity information in order to verify who the stakeholder is may not be included until after the ownership release transaction has been accepted. This allows the final stakeholder in the chain of trust (who has not yet triggered the ownership release transaction) to remain anonymous in the public ledger.

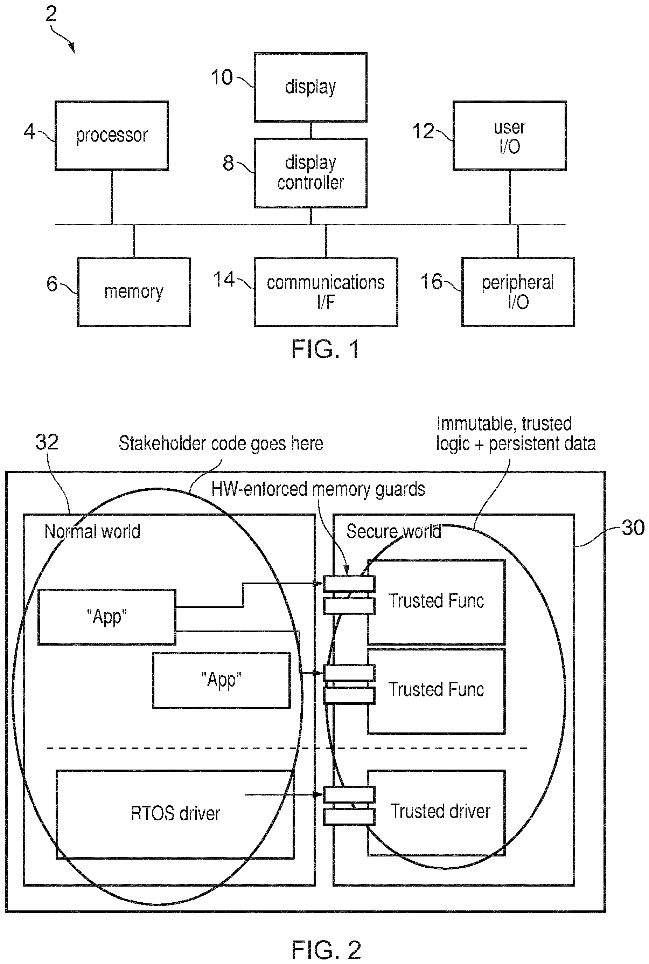

Figure 1 schematically illustrates an example of an electronic device 2 which comprises a processor 4, memory 6, display controller 8 and display 10, user input/output circuit 12 for accepting user input (e.g. a keypad or touch screen), communications interface 14 for communicating with other devices, and a peripheral input/output circuit 16 for communicating with other peripheral devices, such as a memory card providing further data storage or fingerprint sensor for detecting fingerprints. In operation, the processor 4 executes computer program instructions that may be stored in the memory 6, an external data storage unit or dynamically downloaded via the communications interface 14. The results of the processing performed may be displayed to a user via the display controller 8 and display 10. User inputs for controlling the operation of the electronic device 2 may be received via the user input/output circuit 12. It will be appreciated that the computer program could be written in a variety of different computer languages. The computer program may be stored and distributed on a recording medium or dynamically downloaded to the device via the communications interface 14. It will be appreciated that this is a simplified example of some components of an electronic device, and the architecture of the device may vary considerably, and the electronic device may have other elements not shown in Figure 1 for conciseness. The electronic device could be any of a wide variety of types of device, including for example a desktop or laptop computer, a mobile device such as a mobile cellular telephone or tablet computer, or an embedded device within an appliance such as a television, washing machine or refrigerator for example, or a sensor in the Internet of Things (which may not have any user interface functionality and so may not comprise the display controller 8, display 10 and user input/output circuit 12). Hence, the present technique is not restricted as to the type of electronic device in which the cryptographic techniques for establishing trust are implemented.

In some examples, to increase security, the electronic device 2 may have a hardware architecture which supports operation of a secure runtime environment 30 in addition to a normal runtime environment 32, as shown in Figure 2. Secure data may be processed using trusted applications and/or a secure operating system executing under the secure runtime environment. Hardware mechanisms may be provided to ensure that applications or an operating system running in the normal runtime environment 32 cannot access secure data or code associated with the secure runtime environment 30. For example, a memory management unit or similar structure can be used to partition the memory address space into secure and normal regions, and prevent access to the secure regions by code executing in the normal runtime environment. There are a number of options for policing access to the secure runtime environment. In one example, transitions between the normal and secure runtime environments may be policed by secure monitor code which may permit transitions in a limited set of circumstances. For example, an exception mechanism may be used to trigger transitions between the runtime environments via the monitor code, which can check whether the application requesting access to the secure runtime environment is allowed to do so. Alternatively, rather than using software to police the transitions, the hardware architecture could permit branching between the normal and secure runtime environments 30, 32 directly, but hardware mechanisms may be provided to ensure safe transitions, such as requiring that the non-secure code only branches to secure code at certain predetermined entry points. For example, a given application may then branch to a function in the secure domain for carrying some security-sensitive functionality such as password checking, before branching back to the normal world 32 at the end of the function. An example of a hardware architecture providing such a secure runtime environment 13 may be the Trustzone® architecture provided by ARM® Limited of Cambridge, UK, although other examples are also available. Hence, if a secure runtime environment is implemented on the device 2, then this can provide greater protection for sensitive data or code running on the electronic device. Nevertheless, the present technique can also be applied to devices not having such a secure runtime environment implemented in the hardware architecture of the device 2.

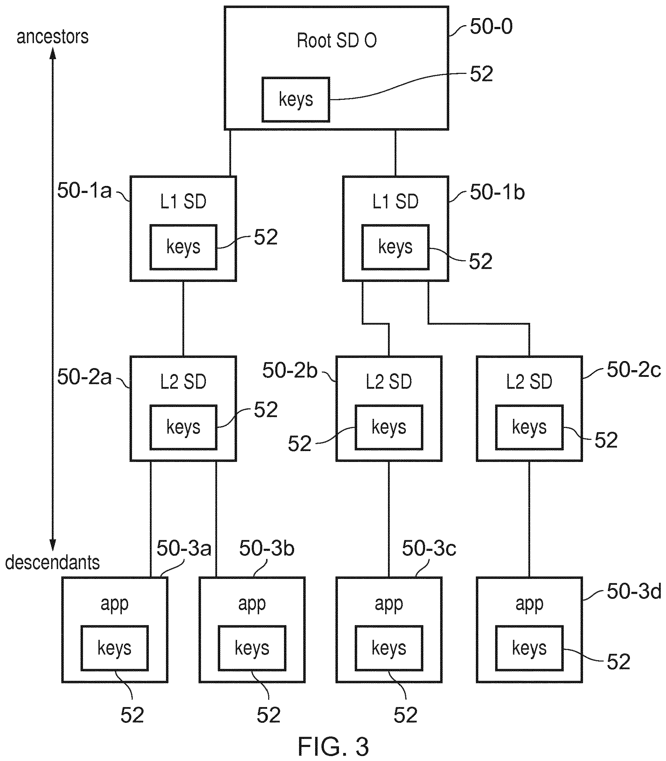

Figure 3 shows, for comparison, an example of a hierarchical chain of trust which could be implemented on an electronic device. In order to verify that commands issued by a given application or other process running on the electronic device come from an authorised source, at least one cryptographic identity 50 may be established for authenticating the commands to be executed by the electronic device. For example, the cryptographic identity may be represented by one or more cryptographic keys 52, signatures or certificates. For example, commands to be executed may be signed using a given key and the signature associated with the command may be verified by decrypting the signature using a corresponding key. For example a public-private key infrastructure may be used. If the signature associated with a given command is verified as being authentic, then it can be trusted that the command has come from the expected source and can be acted on by the electronic device. On the other hand, if a hacker or other malicious party attempts to inject commands to fool the device into thinking they come from some other source but do not have the appropriate keys for verifying their cryptographic identity, then the commands will not be authenticated and will not be acted upon. Similarly, the device can use its keys 52 to sign data to prove the device's identity to other parties. This approach can be used for protecting sensitive applications such as mobile banking applications, electronic identification applications (e.g. electronic passports or the like), secure payment applications, and so on.

The trust established by a given cryptographic identity may derive ultimately from a particular certifying authority, who could be a manufacturer of the electronic device itself, a party supplying secure software for setting up the infrastructure for checking the cryptographic identity associated with the commands to be executed and verifying their authenticity, or an entirely independent body responsible for authorising other parties applications for example. Hence, one approach for maintaining trust in the applications running on the electronic device could be that the certifying authority sets up cryptographic identities for each of the applications which could be installed on the device and is responsible for configuring the device with information defining the criteria to be used for all signing and authenticating operations associated with any command to be executed by an application. However, in practice the number of applications that could potentially need authentication is vast, and one certifying authority may simply not have enough resources for verifying all applications, including specifying the criteria to be applied for commands from any given application to be authenticated. Hence, this approach with a single agent establishing the cryptographic identity for all applications does not scale in practice.

The hierarchical chain or trust shown in Figure 3 provides a way for the certifying authority acting as the root of the trust to delegate signing or authentication functions to other parties. The root authority can authorise another party to authenticate commands on its behalf, by establishing a cryptographic identity for that other party and providing means within the electronic device for verifying that commands purporting to come from that other party actually did come from that party. The other party to which the root authority delegated trusted operations may then itself delegate further operations to another party for authenticating messages on its behalf, again with a corresponding cryptographic identity being established for that other party. This may continue so that, as shown in Figure 3, the hierarchical chain of trust may include a number of domains 50 each providing a cryptographic identity for authenticating commands to be executed by the electronic device, where each domain 50 which is not the root domain 50-0 has been configured based on commands authenticated by a parent domain.

However, efficiently seeding / imprinting device-specific trust roots in a manufacturing setting is an expensive and cumbersome undertaking. Additionally, it introduces an aspect of key management - the stakeholder that owns the seeded keys typically will maintain a PKI-like system (or a publicly accessible server setup) for distributing and transforming the trusted channel to the endpoint into device authentications and attestation for other stakeholders needing to establish trust in the aforementioned device. Few device / chip providers are prepared to undertake the responsibility of guaranteeing the device identity to stakeholders further down in the manufacturing chain, and not all such stakeholders are prepared to trust say the attestations of a small, unknown chip provider. This issue is highlighted in situations where the manufacturing process is either small-scale or divided into a large number of iterative sourcing steps with no clear "computing device manufacturer". This is assumed to become the case with loT sensor and actuator devices, where we have SoC manufacturers, sourced by reference design integrators, possibly sourced by the original design manufacturer (ODM) directly, or via an external hardware contractor. The software and its component production may follow an equally multi-dimensional stakeholder model. Hence, it is hard to find a clear producer/consumer situation for cryptographic trust root in such scenarios, especially considering that the total value of the resulting devices likely fall in the few-dollars range.

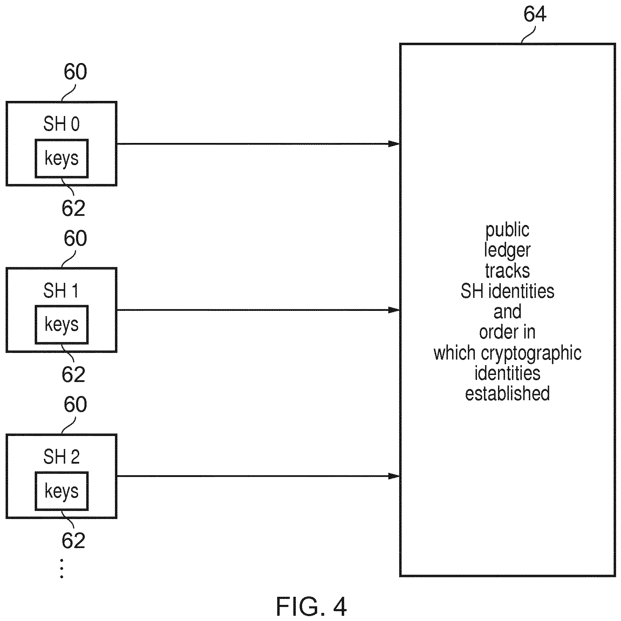

Figure 4 shows an alternative approach to establishing a chain of cryptographic identities in an electronic device 2. A number of stakeholders 60 may independently establish cryptographic identities in the device 2, each cryptographic identity represented by a set of one or more device keys 62 for encryption/decryption, proving the device's identity to others, and/or authenticating commands received by the device (in some cases the same key may be used for all of these functions or different keys can be provided for different functions). Having established their respective cryptographic identities in the device, each stakeholder 60 can then use corresponding keys to interact with the device, in order to provide trust that only the relevant stakeholder can configure aspects of the device associated with that stakeholder, or that data received from the device 2 really did come from that device 2. Meanwhile, information relating to each stakeholder's key provisioning operation is uploaded to a public ledger 64 on establishing the cryptographic identity by that stakeholder. The public ledger 64 maintains a linked chain of blocks of information, which tracks the sequence of cryptographic identities set up for the device so that it can subsequently be verified that the independently configured identities do relate to the same device. Also, the order in which those identities were established, and the identities of the stakeholders who established those identities, can be checked using the public ledger. For example, the public ledger may be maintained on a publicly accessible server by a party independent from the stakeholders themselves, or by a particular stakeholder.

For example, the public ledger may use block chain technology in relation to enabling multiple stakeholders to extend the trust of a device (often an loT device) by adding their components in a trusted worthy manner. An anonymity-preserving mechanism is provided for managing identity transfers with respect to an embedded device, especially in the context of loT, where the core processing unit, during separate steps of device production and sales, will pass by several, respectively independent, stakeholders, all which may have an incentive to revisit the device for management at a later time but where no two of the individual stakeholders share, or want to share, a cryptographic trust relationship. The mechanism uses doubly linked hash chains.

The technique uses a trusted environment in the system on chip (SoC), and presents a solution by which any stakeholder in the production process (at the time the SoC is in "his hands" or being configured with "his software") can set up independent keying with the device, however in a way where all the individual identities later can be proven (using a public ledger) to refer to the same device (which can be important when liability issues are encountered (counterfeit protection, warranty service) or security protocols (version upgrades) need to be synchronized between several parties.

With this approach, device imprinting can be done without a need to rely on (but does not preclude) inter-stakeholder interaction (agreements or processes). Everybody can do device imprinting separately. The next stakeholder (in the end, the user) is fully anonymous with respect to the device as well as any prior stakeholder in the chain. In some examples, there is only backwards binding. The identity binding towards the origin is subject to the respective stakeholder revealing a handle (say a public key) that binds to the device identity. The identity chain history is immutable. It can only be extended, but no identity can be removed from the chain. The public ledger ("block chain") for the device can be maintained and verified by a functionally correct party (one who checks the bindings between the chain elements). The secure environment in the device will also maintain this property, but with a public ledger also the transaction binding (when a new identity has been added to the device) can be maintained, if this is important for the deployed model, e.g. a stakeholder may e.g. require that sourced chips are not re-used ones, or that only well known, attestable other entities have device trust roots in the device (counterfeit protection).

This technique leverages the isolation properties of a single (anonymous) device to partly stand for the trustworthiness based on which the ledgers are constructed and publicly (or locally) maintained. A further, external, trust authority (like a Bitcoin ledger) can additionally be used to guarantee the global freshness of the ledger in such cases where this is important, for devices that have passed the production phase and entered usage, this guarantee is not relevant. The advantage of the model specifically appears where there are more than one stakeholder who in some, non-predetermined form or combination must agree on the identity of a device they all have an attachment to.

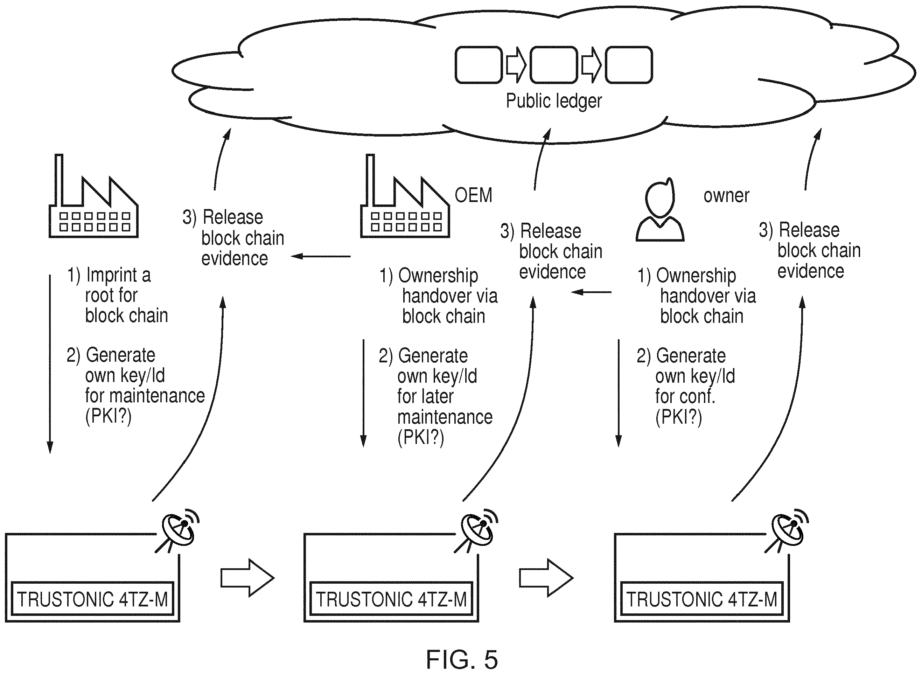

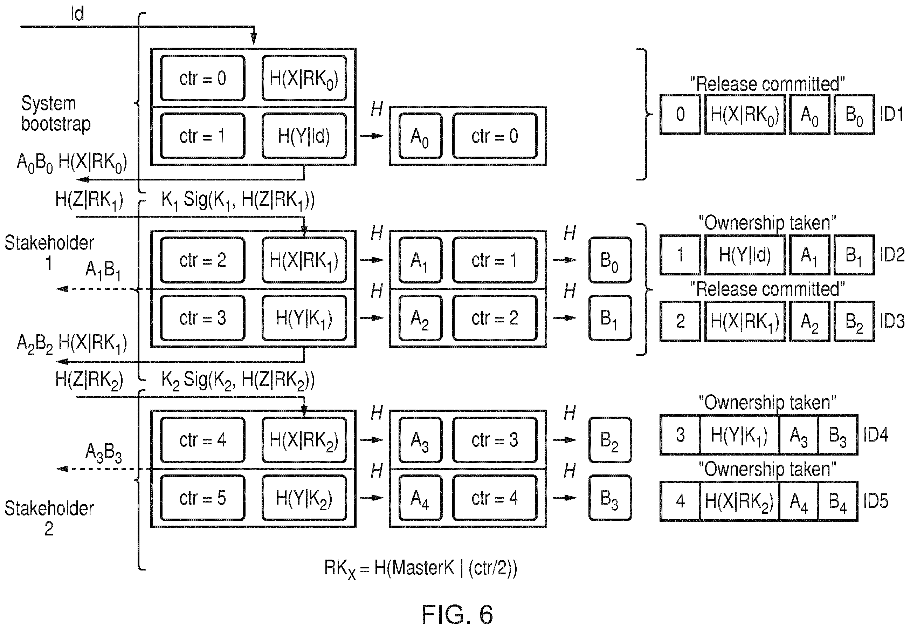

To explain the algorithm, we will first describe the API of the stakeholder who generates an identity and an identity key (as in Figure 5). Then, we will later describe the inner flow (Figure 6) in the isolated domain of the device and possible network extensions of the system.

The technique addresses a number of requirements in parallel. These include:
**R0**: The distributed (in terms of trust) device setup process as outlined above. The requirement is that a device security setup must be applicable to (follow) the general setup of the device.
**R1:** A stakeholder can for itself (cryptographically) identify a device when it comes back to being serviced, either locally or remotely. Remote servicing does include the provisioning of patches and other software upgrades to the device, in a secure channel between the originator of the servicing, and its target.
**R2:** Device servicing may include policy constraints between stakeholders. E.g. a firmware upgrade may only be accepted based on a signed confirmation of the user. This technique does not elaborate on this option explicitly (many kinds of stakeholder-interdependent policies can be constructed with the setup) - rather it provides a fundament of trust roots on top of which such policy enforcement can be constructed.
**R3:** The stakeholders may choose to remain anonymous, or provide proof of partial "ownership" of the device. The authentication of the stakeholder is achieved by attesting to a part of the hash (block) chain related to the stakeholder, i.e. it is a process external to this technique. However, due to the linked property of the generation proof, this system, if so required or used, provides a publicly verifiable binding to the stakeholders partaking in the trail of the device setup.
**R4:** A verifiable public ledger of the device's history is used to ascertain how the device has been set up, and how stakeholders relate to the different roles of the device setup and maintenance. This ledger will be wrapped up when reaching the end customer, i.e. at that point in time, the stakeholders associated with the device are frozen, and cannot change any more. The public ledger can be device-local, or global.

The top-level flow of device set-up is outlined in Figure 5. A stakeholder gets a shipment of partially assembled computing devices. We are faced with two options, either the sourcing is completely open, whereby there is no access control to make a new identity for the device. There may also be a transfer of authorization between devices:
**0a)** No authorization: The device flash contains a token H(RKx). Read it off, this will be the password by which a stakeholder-specific key will be generated in step 1.
**0b)** The previous stakeholder provides usage activation for his produce. In that case, the labeling station asks the device for its Id. At that stage, a protocol between the stakeholders can be used to exchange the device Id for the release token for the device.

In the next phase the new stakeholder takes ownership of the device. This encompasses the device to produce a key for device identification and/or device decryption. The mechanism does not mandate that this key is asymmetric (ECC/RSA), it can equally well be a symmetric trust root, say for performance (or code-size reasons), which in many cases is assumed to be the case in these classes of the devices for now.
NOTE: The use case is described as a key generation activity. It can equally well (with no loss of applicability) be described as a key provisioning activity -- especially for symmetric key systems this may be a preferred option, as the provisioned key can be, say, a key diversified from a master key and the current device identity.

The stakeholder taking ownership of the device encompasses three distinct parameters to be provided to or agreed with the device:
0) Providing a token H(RKx) to allow for the ownership operation. This binding value was returned to the previous stakeholder, and can be used (between the two stakeholders) 1) as a public value, say temporarily stored on the device flash for easy access or 2) as a token that the new stakeholders requests from the previous owner.
1) Generating keys on the device - e.g. one for signatures, and one for encryption/decryption). In case these keys are asymmetric, the public components of those keys are returned, otherwise the keys themselves. The device will store these for later use on the device for communication with the stakeholder in question, these pairs of keys are indexed by the stakeholder order. Alternatively, this function can be implemented as key imprinting from the stakeholder to the device.
2) Providing, by the stakeholder, a public key and a signature by that public key computed over the token H(RKx) to the device. This results in a validation operation being carried out in the device prior to accepting the ownership-taking operation. The key shall be permanently stored on the device with the related device encryption and signature key. This key can be symmetric or asymmetric, or a compromise between the two such as a Lamport signature seeded by a hash-based key derivation scheme over a shorter secret transmitted by the stakeholder host.
3) In successful operation, the device also returns data for the block chain which can be put on a public ledger. This chain data binds the signature key to the provisioning activity - a separate certificate on the public component of this key will then prove stakeholder identity, and the block chain itself will irrespectively point to the presence of such a signature key in the list of keys for this specific device.
4) Furthermore, there are two distinct operations (following each other in pairs) in the provisioning process. The first one of these is the process by which ownership is taken (and stakeholder keys are generated or inserted). At the point this operation has been run, the device is (in terms of security) fully operational, keys can be used to sign information, receive encrypted information in combinations (policy) or individually. Let's call this operation "take ownership". (Figure 6). A second operation -- "commit release" uses the previous transfer token to move the device into a "locked" state for transfer to the next stakeholder. This feature is primarily intended to protect the device in transfer, i.e. against theft of non-finalized devices. The transfer token between the "release committed" and the next "take ownership" is the one discussed in (0). The final stakeholder (the user) simply erases the transfer token returned from the final "take ownership" operation, removing any option for further extending the ownership sequence (this is more of a practical DoS protection mechanism than a security feature, since the indexed beginning of the stakeholder chain is fixed in its order as it is constructed).

In an API sense, the mechanism proceeds as follows on the API: a single stakeholder invokes the mechanism two times with the same token. The first invocation is the one where keys and public keys are input. The responses received from that interaction correspond to an "ownership taken transaction". The second invocation ("release committed") moves the device into a transitory mode, where a new token is generated AND the device is rendered temporarily non-functional (in terms of the provided keys) until the next ownership input is generated. Note that the final stakeholder (the user?) terminates the chain by never running the second round of operation, and since the signature over H(RKx) can only be produced by him (the previous stakeholder - and possibly the whole world -- knows H(RKx) but cannot reproduce the signing), the continuation opportunity is not available. Since persistent storage in the secure environment is assumed, the length of the stakeholder chain can of course also be limited by internal design.

At this stage, the identity path of the device is locked - no new identity can be added to the device without the authorization of the latest stakeholder. Also, there is no trace (yet) in the list of identities in the ledger of anything that can be verified as belongings to the latest stakeholder, his relation to the device is completely anonymized, despite the fact that he owns a key that can be used to securely authenticate the device OR to communicate with the device (e.g. using other interfaces). For example, for stakeholder 1 in Figure 6, although B₁ on the ledger is dependent on that stakeholder's key K₁, it cannot be verified until A₂ is uploaded in the subsequent release committed transaction, so stakeholder 1 is effectively still anonymous to the ledger. A specific way of setting up key (management) in a device produced in a certain flow is described above. This can be used as an loT key imprinting solution. Furthermore, it can integrate well with key management.

For example, this technique may be part of a secure operating system leveraging ARM@ TrustZone®-M on ARM's Cortex®-M processors, which enables chip makers, devices makers and solution developers to offer new security infrastructures and services. Targeted at loT devices and using standard blockchain technology, each stakeholder of the device can easily create a chain of trust to leverage unique scalability across a wide range of devices. With the number of connected devices growing exponentially every day, this accelerates the need for increased security and trust to strongly authenticate and protect sensitive data on endpoint devices, even into the smallest sensors. Healthcare, smart homes and smart cities are a few examples of tremendous markets for growth. A hardware-based trusted operating environment can provide strong device authentication and protection for data at rest and in transit, to a whole new range of devices. With each device becoming a root of trust, stakeholders in loT can expand their portfolio of services while also addressing privacy, operational and security concerns. The use of blockchain enables each stakeholder to easily personalize a device, without the need to build a highly complex and expensive infrastructure.

Hence, loT device production lifecycle involves a variable set of independent stakeholders: e.g. SoC manufacturer (core + mem), Reference design integrator, Device manufacturer, Operator / Service provider, Owner. All of these stakeholders have a role in device personalization, from providing to the device drivers, software images, content data or keys. These roles also extend into the active lifecycle of the loT device in terms of repair / service guarantees and software (data/key) updates, as well as possibly data collection and operation. The stakeholders are independent, and the production chain is not always predetermined (the chip manufacturer may not know during production in which device and for service the chip eventually will be used). TrustZone-M in ARM v8M processors can be used similarly to TrustZone-A in mobile devices - i.e. as a device-local trust root. In this disclosure, a "secure world" in TZ-M as shown in Figure 2 is, together with a simulated public ledger (a blockchain), used to provide cryptographic proof of the security imprinting by different stakeholders in the device's lifecycle (integrity guaranteed by TZ-M), and provide for each stakeholder a "slot" for device-specific key material that later can be used for secure updates or device identification.

In Figure 6, "ctr" represents a counter held by the device 2, which tracks the number of accepted transactions processed by the device when establishing the various cryptographic identities. H() is a one-way hash function used for generating the elements of the block chain, X, Y and Z are arbitrary integers appended to the values used for generating the hashes. RKₓ denotes the token generated by the device when interacting with stakeholder x-1, which is used by the device to authenticate the next stakeholder x in the chain. Acceptance of the ownership taken transaction is dependent on the stakeholder providing the appropriate token. Stakeholder x-1 can provide the token to a specific stakeholder to allow them to configure a further cryptographic identity in the device, or alternatively can make the device open to any party to provide a further cryptographic identity by storing the token in an accessible location, e.g. a storage location in the normal world 32 of the device 2, or a location on a publicly accessible server from which the token can be downloaded. As shown in Figure 6, the token RKₓ may be generated based on a master key (some secret information held by the device which is specific to that device) and a counter (ctr) which tracks the number of accepted transactions. Kₙ denotes a key which the stakeholder provides to the device 2 to allow the device to identify the identity of the stakeholder, and to allow the stakeholder's identity to be represented on the block chain. The stakeholder's key Kₙ is separate from the device key(s) which are embedded in the device on successful acceptance of the ownership taken transaction (the device keys are not shown in Figure 6). The stakeholder's key Kₙ may be a symmetric key or the public key corresponding to a private key held by the stakeholder.

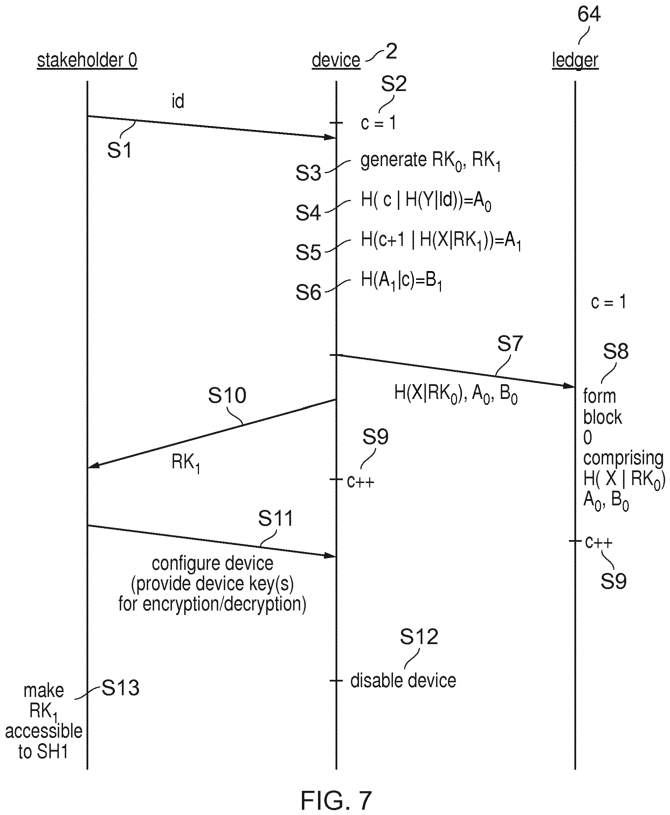

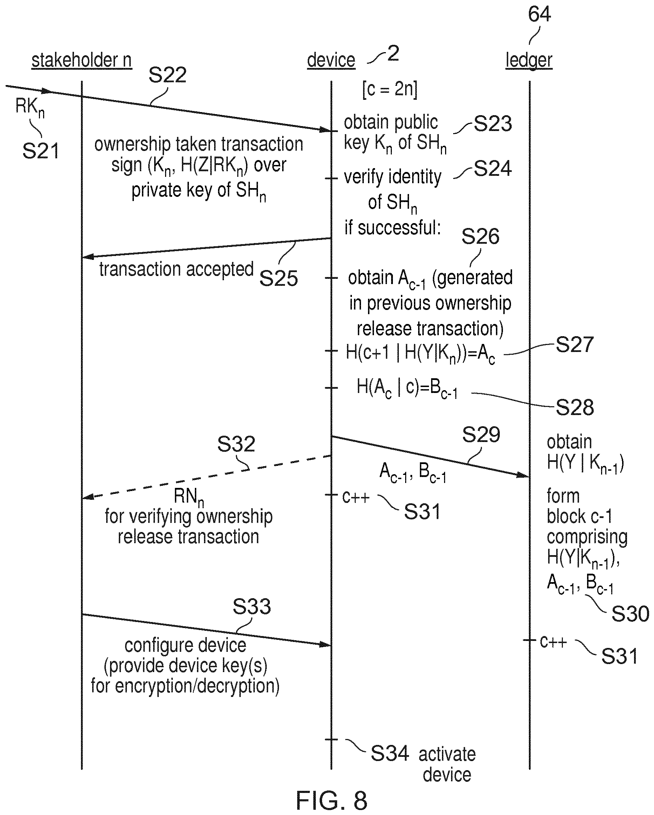

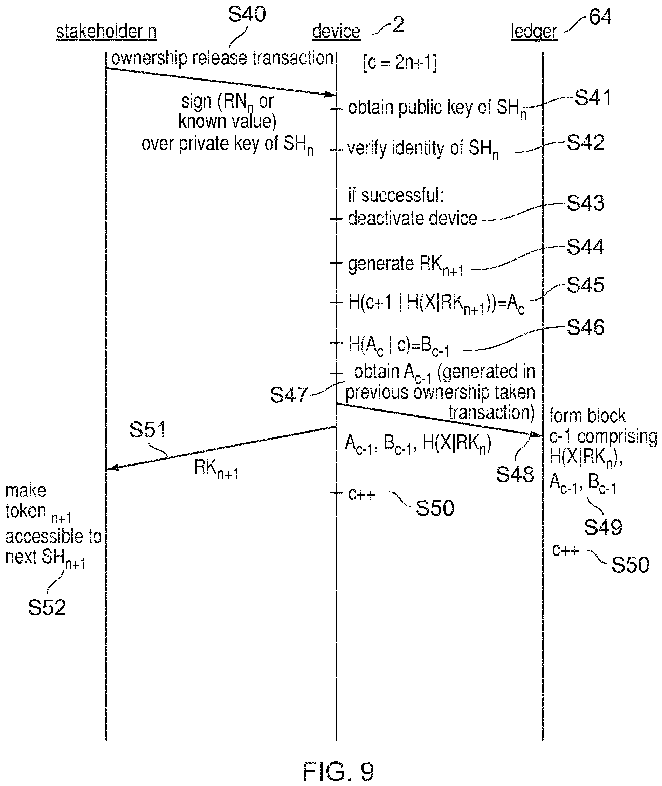

Figures 7 to 9 show methods for establishing the cryptographic identities on the device 2. Figure 7 shows a method for initializing the device by the first stakeholder in the chain. Figures 8 and 9 show methods for processing the ownership taken transaction and ownership release transaction respectively when initiated by a subsequent stakeholder. Each diagram shows the messaging flow between the stakeholder n (SHn) who establishes an n^{th} cryptographic identity in the chain, the electronic device 2 itself, and the public ledger 64. The steps performed at the electronic device 2 may be controlled by software (e.g. by a secure application running in the protected execution environment provided by the secure world 30), or by bespoke hardware circuits, or a combination of software and hardware.

Figure 7 comprises the following steps performed on the device when initialised by the first stakeholder in the chain, stakeholder 0 (SH0):
- S1: SH0 provides a device identifier (id) which identifies the device, which is stored locally within the device (alternatively the device identifier could be generated locally within the device). The device identifier (or H(Y|Id) - a hash of the identifier) can subsequently be used when communicating with the ledger 64 to identify which blockchain is to be updated with data for the particular device. The device identifier can also be used for other purposes when tracking a particular device.
- S2: A transaction counter c is initialised to be equal to 1. The public ledger 64 also holds a corresponding counter which starts at 1 when generating the first block.
- S3: the device 2 generates transfer tokens RK₀ and RK₁. For example, the transfer token RKₓ may be dependent on some secret information (e.g. a master key) held by the device 2. For example, RKₓ may be generated according to H(MasterK | x).
- S4: the device 2 generates a hash value A₀ based on the device ID and the count value, according to A₀ = H(c|H(Y|id)).
- S5: the device 2 generates a hash value A₁ based on the transfer token RK₁ and the count value, according to A₁ = H(c+1|H(X|RK₁)).
- S6: the device 2 generates a hash value B₁ based on the counter and hash value A₁, according to β₁ = H(A₁|c).
- S7: the device transmits H(X|RK₀) (a hash of the transfer token RK₀), A₀, B₀ to the public ledger 64. Optionally, H(Y|Id) (a hash of the device identifier) can also be transmitted to the ledger 64, for use when assembling a subsequent block 1 of the block chain.
- S8: the public ledger 64 assembles block 0 of the block chain, comprising H(X|RK₀), A₀ and B₀.
- S9: the device 2 and public ledger 64 increment their respective counters.
- S10: the transfer token RK₁ is returned to SH0;
- S11: SH0 configures the device 2 with the keys for establishing the cryptographic identity. As well as providing keys, the configuration of the device could also include installing software on the device. For example, SH0 may install software for controlling the device to handle the ownership taken transaction and ownership release transaction in the way discussed below, or other software controlling how the device 2 can interact with subsequent stakeholders or users.
- S12: the device is disabled so that the established cryptographic identity cannot be used to authenticate commands, encrypt/decrypt data, or generate signatures. For example, the device may have a mode where the secure data and keys within the secure domain 30 are inaccessible.
- S13: SH0 makes the transfer token RK₁ accessible to the next stakeholder, stakeholder 1 (SH1), for example by providing the transfer token RK₁ to SH1 by private communication, or storing the transfer token RK₁ in a publicly accessible location such as on the device itself or on a server. The device 2 is now provided to stakeholder SH1.

Figure 8 shows the method for performing an ownership taken transaction initiated by stakeholder n (SHn), where n ≥ 1. Figure 8 comprises the following steps. At the time of processing the ownership taken transaction for stakeholder n, the counter c of the electronic device 2 and public ledger is equal to 2n.
- S21: SHn obtains the token RKₙ which was generated by the device in a preceding ownership release transaction (or generated at step S3 in the initialisation operation for RK₁). SHn could obtain the token either from the previous stakeholder SHn-1 or from a location on the device itself or a public server.
- S22: SHn generates a signature value by signing a block of data, including SHn's public key Kₙ and a hash of the token H(Z|RKₙ), using SHn's private key, and issues an ownership taken transaction to the electronic device 2, specifying the signature value.
- S23: the device 2 obtains the public key of stakeholder SHn, e.g. from a server of a certifying authority who holds the stakeholder's SHn certificate, or from a location within the device itself (e.g. the device may receive batches of certificates to be cached within the device, so may already hold the stakeholder's certificate).
- S24: the device verifies the identity of SHn using the signature from the ownership taken transaction and SHn's public key. This identity verification may not require SHn to be any specific party, but may merely be a verification that the identity of SHn can be certified - i.e. that SHn is who they claim to be. For example, the device decrypts the signature using the public key, and checks whether the public key Kₙ included in the signature matches the public key Kₙ obtained at S23. If the identity of SHn cannot be verified, the ownership taken transaction is rejected. However, if the identity of SHn is successfully verified, the method proceeds further to S25.
- S25: the device 2 signals to SHn that the ownership taken transaction has been accepted, and SHn can now start preparing the commands for configuring the device to provide the new cryptographic identity.
- S26: the device 2 obtains hash value A_{c-1}, which was generated in a preceding ownership release transaction (see step S45 discussed below). This hash value A_{c-1} is generated by applying the hash function H() to the token RKₙ generated in the preceding ownership release transaction. In the case of A₁, it was generated at S5 of the initialisation operation of Figure 7.
- S27: the device 2 concatenates c+1 (the current counter value + 1) with a hash of SHn's public key H(Y|Kn), and applies the hash function H() to the result to generate a hash value A_{c} = H(c+1|(Y|Kn)).
- S28: the device 2 concatenates A_{c} and the current value of the counter c, to generate a second hash value B_{c-1} = H(A_{c}|c).
- S29: the device 2 transmits A_{c-1} and B_{c-1} to the public ledger (e.g. together with the device identifier Id to identify which ledger record to update - the ledger 64 may hold chains for many devices).
- S30: The public ledger 64 obtains a value H(Y|Kₙ₋₁) corresponding to a hash of the public key of the previous stakeholder SHₙ₋₁. The previous stakeholder's key Kₙ₋₁ could either have been uploaded to the ledger during one of the ownership taken/release transactions initiated by that previous stakeholder, or obtained from a public certificate in a similar way to the way the current stakeholder's key Kₙ was obtained at step S3. When performing the ownership taken transaction for SH1, the previous stakeholder's key is replaced with the device identifier Id, so that H(Y|Id) is obtained - this could be obtained from the device 2 itself and transmitted at step S29, or could already be stored by the public ledger 64 if transmitted during the initialisation operation of Figure 7. The public ledger 64 assembles the (c-1)^{th} block for the block chain comprising at least the hash of the previous stakeholder key H(Y|Kₙ₋₁) (or H(Y|Id) for SH1's ownership taken operation), the first hash value A_{c-1} binding the current count value c to the transfer token, and the second hash value B_{c-1} binding the current and next count values c, c+1 to the current stakeholder's identification key Kₙ.
- S31: both the device 2 and the ledger 64 increment their transaction counter c.
- S32: optionally, the device 2 can return a random number RNₙ to the stakeholder n, for use in verifying the stakeholder's identity when handling a subsequent ownership release transaction. However, this is not essential as the stakeholder could also prove their identity using the signature over their private key.
- S33: the stakeholder SHn configures the device 2 with the appropriate keys for establishing the cryptographic identity. For example, the stakeholder SHn could generate the keys and embed keys into the device, or alternatively the keys could be generated inside the device itself, with the public components of the keys then transmitted to the stakeholder n or a certifying authority for subsequent verification of the device. The keys could be symmetric or asymmetric keys. Different keys could be provided for different functions, e.g. one key or set of asymmetric keys for encryption/decryption and another key or set of asymmetric keys for signatures. As well as providing keys, the configuration of the device could also include installing software on the device. The public components of the device keys can also be transmitted to the public ledger for holding with the corresponding ledger entry.
- S34: the device is activated, and the established cryptographic identity can then be used by the device for verifying the authenticity of commands or other devices with which the device 2 is communicating, and/or by other devices to verify the authenticity of the device 2.

As shown in Figure 9, at the time of processing an ownership release transaction for stakeholder n, the counter c is equal to 2n+1. Figure 9 comprises the following steps:
- S40: SHn issues the ownership release transaction, which specifies a signature signed using the private key of SHn. The signature can be of information including the random number returned by the device 2 at step S32 when handling the ownership taken transaction, or could relate to some other known value which the device 2 holds, which can be compared against the signature.
- S41: the device 2 obtains the public key of SHn, similar to step S23 of Figure 8.
- S42: the device 2 verifies the identity of SHn using the signature from the ownership release transaction and SHn's public key. For example, the device decrypts the signature using the public key, and checks whether the random value or known value included in the signature matches the value held by the device 2. If the identity of SHn cannot be verified, the ownership release transaction is rejected. However, if the identity of SHn is successfully verified, the method proceeds further to S43.
- S43: the device is deactivated so that previously established cryptographic identities cannot be used to authenticate commands, encrypt/decrypt data, or generate signatures. For example, the device may have a mode where the secure data and keys within the secure domain 30 are inaccessible.
- S44: the device 2 generates the transfer token RKₙ₊₁ for transferring to the next stakeholder. For example, the transfer token RKₙ₊₁ may be dependent on some secret information (e.g. a master key) held by the device 2 and/or the current count value c. For example, with the counter nomenclature used in Figures 7-9, RKₙ₊₁ may be generated according to H(MasterK | (c+1)/2).
- S45: the device 2 generates a hash value A_{c} based on the transfer token and the current count value + 1, e.g. A_{c} = H(c+1|H(X|RKₙ₊₁)). The hash value is stored on the device (and can be obtained later at step S26 when processing a subsequent ownership taken transaction, alternatively step S26 could generate the hash value A_{c} again to avoid storing the value on the device during transit).
- S46: the device 2 generates another hash value B_{c-1} based on the count value c and the previously generated hash A_{c}, according to B_{c-1} = H(A_{c}|c).
- S47: the device 2 obtains the hash value Ac-1 generated in the previous ownership taken transaction at step S27 (which can be stored locally on the device, alternatively to avoid storage it can be generated again at step S27 as the current stakeholder is the same as the stakeholder that initiated the ownership taken transaction and so their key Kₙ is still available);
- S48: the device 2 transmits A_{c-1}, B_{c-1}, and H(X|RKₙ) (a hash of the previous transfer token RKn, not the new transfer token generated at step S44) to the public ledger 64 (again, accompanied by the device identifier if necessary to identify which public ledger chain to update).
- S49: the public ledger assembles the (c-1)^{th} block for the block chain comprising A_{c-1}, B_{c-1}, and H(X|RKₙ). Hence, this block on the block chain includes a first value (A_{c-1}) which is dependent on the identity information and a current value of said counter, and a second value (B_{c-1}) which is dependent on the transfer token and the current and next values of the counter. Note that A_{c-1} also provides information for validating the identity of the stakeholder who initiated the most recent ownership taken transaction to the public ledger, since A_{c-1} can be used to reconstruct B_{c-2} already on the public ledger to verify that B_{c-2} corresponds to the current stakeholder's public key Kₙ.
- S50: the device 2 and the public ledger 64 both increment their counters.
- S51: the transfer token RKₙ₊₁ generated at step S44 is returned to SHn.
- S52: the stakeholder SHn makes the transfer token RKₙ₊₁ accessible to the next stakeholder SHn+1, either by providing the token to the next stakeholder through private communication (to allow only that particular stakeholder to configure the next link in the chain of trust), or by making the token accessible to stakeholders in general, e.g. by storing the token on the device itself or making it accessible on a public server.

It will be appreciated that Figures 7 to 9 show a particular example, which is not the only way of implementing the flow. For example, steps can be performed in a different order. Also, the counter could start at 0 instead of 1, or some other arbitrary value, or the counter could be incremented at a different point of the processing of a given transaction, in which case other references to the counter may change accordingly.

In summary, by performing these steps, the blockchain ends up including a series of blocks as follows:
0. H(X|RK₀), A₀ = H(1 | H(Y|Id)), B₀ = H(A₁) | 1)
1. H(Y|Id), A₁ = H(2 | H(X|RK₁)), β₁ = H(A₂ | 2)
2. H(X|RK₁), A₂ = H(3 | H(Y|K₁)), B₂ = H(A₃) | 3)
3. H(Y|K₁), A₃ = H(4 | H(X|RK₂)), B₃ = H(A₄ | 4)
4. H(X|RK₂), A₄ = H(5 | H(Y|K₂)), B₄ = H(A₅) | 5)
5. H(Y|K₂), A₅ = H(6 | H(X|RK₃)), B₅ = H(A₆ | 6)
6. H(X|RK₃), A₆ = H(7 | H(Y|K₃)), B₆ = H(A₇ | 7) (A₇ = H(8 | H(Y|RK₄)
and so on.

Hence, each entry binds the transfer token RK for a given transfer between stakeholders to the stakeholder key K of the preceding or subsequent stakeholder, to provide tracking of the sequence of stakeholders who configured the device and the identities of those stakeholders. To verify that the block chain has been established correctly, the public ledger 64 (or a party verifying the public ledger) can start with the final block in the chain, which provides the data used to form A, B in the preceding blockchain entry, and then step back through the chain using the hash function H() to reconstruct the entries in the preceding entries to check that the blockchain matches the expected values. For example, blockchain entry 6 provides H(X|RK₃) and A₆, which can be used to reconstruct A₅, B₅ for blockchain entry 5; blockchain entry 5 provides H(Y|K₂) and A₅, which can be used to reconstruct A₄, B₄ for blockchain entry 4, and so on back to the start of the chain. The identities of the stakeholders (other than the first stakeholder and the final stakeholder who has not yet performed the ownership release transaction) can be identified from the values H(Y|Kₙ) included in the odd-numbered entries of the block chain.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. A method for establishing a new cryptographic identity for an electronic device (2), the method comprising:
providing, in response to acceptance of an ownership taken transaction initiated by a stakeholder establishing the new cryptographic identity, in the electronic device (2) at least one device key (62) for encryption or decryption of data or commands, or for proving the identity of the electronic device (2), according to the new cryptographic identity, wherein the cryptographic identity is represented by the at least one device key (62), and wherein acceptance of the ownership taken transaction is dependent on the stakeholder providing a transfer token derived from a previous transaction performed on the electronic device (2) by a previous stakeholder who established a previous cryptographic identity in the chain of cryptographic identities; and
uploading, to a public ledger (64) for tracking a chain of cryptographic identities established for said electronic device (2), information indicative of an identity of the stakeholder establishing the new cryptographic identity for the electronic device (2) and an order in which the new cryptographic identity was established with respect to other cryptographic identities in said chain,
wherein in response to acceptance of the ownership taken transaction, data binding identity information indicative of the identity of the stakeholder to the transfer token is uploaded to the public ledger (64), and
wherein the electronic device (2) maintains a counter for tracking a number of transactions accepted by the electronic device (2) for establishing the chain of cryptographic identities, and the data uploaded to the public ledger (64) in response to acceptance of the ownership taken transaction comprises at least:
a first value dependent on the transfer token and a given value of said counter; and
a second value dependent on the identity information and a next value of said counter.

2. The method of claim 1, wherein the transfer token is stored on the electronic device (2) in a location accessible to the stakeholder establishing the new cryptographic identity.

3. The method of any of claims 1 to 2, wherein following acceptance of a given ownership taken transaction, acceptance of a subsequent ownership taken transaction is prohibited until after acceptance of an ownership release transaction.

4. The method of claim 3, wherein following acceptance of the ownership release transaction, the electronic device (2) is prohibited from using said at least one device key (62) provided in response to said given ownership taken transaction or a previous ownership taken transaction for encryption or decryption of data or commands or for proving the identity of the electronic device (2) until after acceptance of said subsequent ownership taken transaction.

5. The method of any of claims 3 and 4, wherein acceptance of the ownership release transaction is dependent on provision of at least one of:
information returned by the electronic device (2) in response to said given ownership taken transaction; and
information for proving that a stakeholder initiating the ownership release transaction is the stakeholder who initiated said given ownership taken transaction.

6. A computer program for controlling an electronic device (2) to perform the method of any preceding claim.

7. A storage medium storing the computer program of claim 6.

8. An electronic device (2) comprising circuitry configured to:
provide, in response to acceptance of an ownership taken transaction initiated by a stakeholder establishing a new cryptographic identity, in the electronic device (2) at least one device key (62) for encryption or decryption of data or commands, or for proving the identity of the electronic device (2), according to the new cryptographic identity, wherein the cryptographic identity is represented by the at least one device key (62), and wherein acceptance of the ownership taken transaction is dependent on the stakeholder providing a transfer token derived from a previous transaction performed on the electronic device (2) by a previous stakeholder who established a previous cryptographic identity in the chain of cryptographic identities; and
upload, to a public ledger (64) for tracking a chain of cryptographic identities established for said electronic device (2), information indicative of an identity of the stakeholder establishing the new cryptographic identity for the electronic device (2) and an order in which the new cryptographic identity was established with respect to other cryptographic identities in said chain,
wherein in response to acceptance of the ownership taken transaction, data binding identity information indicative of the identity of the stakeholder to the transfer token is uploaded to the public ledger (64), and
wherein the electronic device (2) is configured to maintain a counter for tracking a number of transactions accepted by the electronic device (2) for establishing the chain of cryptographic identities, and the data uploaded to the public ledger (64) in response to acceptance of the ownership taken transaction comprises at least:
a first value dependent on the transfer token and a given value of said counter; and
a second value dependent on the identity information and a next value of said counter.

9. The electronic device (2) of claim 8 further comprising circuitry configured to cause the electronic device (2) to perform the method of any of claims 2 to 5.

## Patentansprüche

1. Verfahren zum Einrichten einer neuen kryptographischen Identität für eine elektronische Vorrichtung (2), wobei das Verfahren Folgendes umfasst:
Bereitstellen als Reaktion auf eine Annahme einer Besitzübernahmetransaktion, die durch einen Anspruchsberechtigten eingeleitet wird, der die neue kryptographische Identität einrichtet, in der elektronischen Vorrichtung (2) mindestens eines Vorrichtungsschlüssels (62) für die Verschlüsselung oder die Entschlüsselung von Daten oder Befehlen oder zum Beweisen der Identität der elektronischen Vorrichtung (2) gemäß der neuen kryptographischen Identität, wobei die kryptographische Identität durch mindestens einen Vorrichtungsschlüssel (62) repräsentiert wird und wobei die Annahme der Besitzübernahmetransaktion davon abhängt, dass der Anspruchsberechtigte ein Übertragungs-Token liefert, das von einer vorherigen Transaktion abgeleitet ist, die an der elektronischen Vorrichtung (2) durch einen vorherigen Anspruchsberechtigten ausgeführt wurde, der eine vorherige kryptographische Identität in der Kette von kryptographischen Identitäten eingerichtet hat; und
Laden auf ein öffentliches Konto (64) zum Verfolgen einer Kette von kryptographischen Identitäten, die für die elektronische Vorrichtung (2) eingerichtet wurden, von Informationen, die eine Identität des Anspruchsberechtigten, der die neue kryptographische Identität für die elektronische Vorrichtung (2) einrichtet, und eine Reihenfolge, in der die neue kryptographische Identität in Bezug auf andere kryptographische Identitäten in der Kette eingerichtet wurde, angeben,
wobei als Reaktion auf die Annahme der Besitzübernahmetransaktion Datenbindungs-Identitätsinformationen, die die Identität des Anspruchsberechtigten auf das Übertragungs-Token angeben, in das öffentliche Konto (64) geladen werden, und
wobei die elektronische Vorrichtung (2) einen Zähler zum Verfolgen einer Anzahl von Transaktionen führt, die durch die elektronische Vorrichtung (2) zum Einrichten der Kette der kryptographischen Identitäten angenommen wurden, und die in das öffentliche Konto (64) geladenen Daten als Reaktion auf die Annahme der Besitzübernahmetransaktion zumindest Folgendes umfassen:
einen ersten Wert, der von dem Übertragungs-Token und einem gegebenen Wert des Zählers abhängt; und
einen zweiten Wert, der von den Identitätsinformationen und einem nächsten Wert des Zählers abhängt.

2. Verfahren nach Anspruch 1, wobei das Übertragungs-Token auf der elektronischen Vorrichtung (2) in einem Ort gespeichert wird, der für den Anspruchsberechtigten, der die neue kryptographische Identität einrichtet, zugänglich ist.

3. Verfahren nach einem der Ansprüche 1 bis 2, wobei im Anschluss an eine Annahme einer gegebenen Besitzübernahmetransaktion eine Annahme einer folgenden Besitzübernahmetransaktion bis nach einer Annahme einer Besitzfreigabetransaktion verhindert wird.

4. Verfahren nach Anspruch 3, wobei im Anschluss an die Annahme der Besitzfreigabetransaktion die elektronische Vorrichtung (2) daran gehindert wird, den mindestens einen Vorrichtungsschlüssel (62), der als Reaktion auf die gegebene Besitzübernahmetransaktion oder eine vorherige Besitzübernahmetransaktion geliefert wurde, zum Verschlüsseln oder Entschlüsseln von Daten oder Befehlen oder zum Beweisen der Identität der elektronischen Vorrichtung (2) bis nach der Annahme der folgenden Besitzübernahmetransaktion zu verwenden.

5. Verfahren nach einem der Ansprüche 3 und 4, wobei die Annahme der Besitzfreigabetransaktion von einem Erbringen mindestens eines der Folgenden abhängig ist:
Informationen, die durch die elektronische Vorrichtung (2) als Reaktion auf die gegebene Besitzübernahmetransaktion zurückgegeben werden; und
Informationen zum Beweisen, dass ein Anspruchsberechtigter, der die Besitzfreigabetransaktion einleitet, der Anspruchsberechtigte ist, der die gegebene Besitzübernahmetransaktion eingeleitet hat.

6. Computerprogramm zum Steuern einer elektronischen Vorrichtung (2), um das Verfahren nach einem vorhergehenden Anspruch auszuführen.

7. Speichermedium, das das Computerprogramm nach Anspruch 6 speichert.

8. Elektronische Vorrichtung (2), die eine Schaltung umfasst, die konfiguriert ist zum:
Bereitstellen als Reaktion auf eine Annahme einer Besitzübernahmetransaktion, die durch einen Anspruchsberechtigten eingeleitet wird, der eine neue kryptographische Identität einrichtet, in der elektronischen Vorrichtung (2) mindestens eines Vorrichtungsschlüssels (62) für die Verschlüsselung oder die Entschlüsselung von Daten oder Befehlen oder zum Beweisen der Identität der elektronischen Vorrichtung (2) gemäß der neuen kryptographischen Identität, wobei die kryptographische Identität durch mindestens einen Vorrichtungsschlüssel (62) repräsentiert wird und wobei die Annahme der Besitzübernahmetransaktion von dem Anspruchsberechtigten abhängt, der ein Übertragungs-Token liefert, das von einer vorherigen Transaktion abgeleitet ist, die an der elektronischen Vorrichtung (2) durch einen vorherigen Anspruchsberechtigten ausgeführt wurde, der eine vorherige kryptographische Identität in der Kette von kryptographischen Identitäten eingerichtet hat; und
Laden in ein öffentliches Konto (64) zum Verfolgen einer Kette von kryptographischen Identitäten, die für die elektronische Vorrichtung (2) eingerichtet wurden, von Informationen, die eine Identität des Anspruchsberechtigten, der die neue kryptographische Identität für die elektronische Vorrichtung (2) einrichtet, und eine Reihenfolge, in der die neue kryptographische Identität in Bezug auf andere kryptographische Identitäten in der Kette eingerichtet wurde, angeben,
wobei als Reaktion auf die Annahme der Besitzübernahmetransaktion Datenbindungs-Identitätsinformationen, die die Identität des Anspruchsberechtigten auf das Übertragungs-Token angeben, in das öffentliche Konto (64) geladen werden, und
wobei die elektronische Vorrichtung (2) konfiguriert ist, einen Zähler zum Verfolgen einer Anzahl von Transaktionen zu führen, die durch die elektronische Vorrichtung (2) zum Einrichten der Kette der kryptographischen Identitäten angenommen wurden, und die in das öffentliche Konto (64) als Reaktion auf die Annahme der Besitzübernahmetransaktion geladenen Daten zumindest Folgendes umfassen:
einen ersten Wert, der von dem Übertragungs-Token und einem gegebenen Wert des Zählers abhängt; und
einen zweiten Wert, der von den Identitätsinformationen und einem nächsten Wert des Zählers abhängt.

9. Elektronische Vorrichtung (2) nach Anspruch 8, die ferner eine Schaltung umfasst, die konfiguriert ist, zu bewirken, dass die elektronische Vorrichtung (2) das Verfahren nach einem der Ansprüche 2 bis 5 ausführt.

## Revendications

1. Procédé d'établissement d'une nouvelle identité cryptographique pour un dispositif électronique (2), le procédé comprenant :
la fourniture, en réponse à l'acceptation d'une transaction d'appropriation lancée par une partie prenante établissant la nouvelle identité cryptographique, dans le dispositif électronique (2), d'au moins une clé de dispositif (62) pour le chiffrement ou le déchiffrement de données ou de commandes ou permettant de prouver l'identité du dispositif électronique (2), en accord avec la nouvelle identité cryptographique, l'identité cryptographique étant représentée par l'au moins une clé de dispositif (62), et l'acceptation de la transaction d'appropriation étant fonction de la fourniture, par la partie prenante, d'un jeton de transfert déduit d'une transaction précédente réalisée sur le dispositif électronique (2) par une partie prenante précédente ayant établi une identité cryptographique précédente dans la chaîne d'identités cryptographiques ; et
le téléchargement en amont, vers un registre comptable public (64) permettant le suivi d'une chaîne d'identités cryptographiques établies pour ledit dispositif électronique (2), d'informations indiquant une identité de la partie prenante établissant la nouvelle identité cryptographique pour le dispositif électronique (2) et un ordre dans lequel la nouvelle identité cryptographique a été établie par rapport à d'autres identités cryptographiques dans ladite chaîne,
en réponse à l'acceptation de la transaction d'appropriation, des données liant des informations d'identité indiquant l'identité de la partie prenant au jeton de transfert étant téléchargées en amont vers le registre comptable public (64), et
le dispositif électronique (2) tenant à jour un compteur permettant le suivi d'un nombre de transactions acceptées par le dispositif électronique (2) pour l'établissement de la chaîne d'identités cryptographiques, et les données téléchargées en amont vers le registre comptable public (64) en réponse à l'acceptation de la transaction d'appropriation comprenant au moins :
une première valeur fonction du jeton de transfert et d'une valeur donnée dudit compteur ; et
une deuxième valeur fonction des informations d'identité et d'une valeur suivante dudit compteur.

2. Procédé selon la revendication 1, dans lequel le jeton de transfert est enregistré dans le dispositif électronique (2) à un emplacement accessible par la partie prenante établissant la nouvelle identité cryptographique.

3. Procédé selon l'une quelconque des revendications 1 et 2, dans lequel, suite à l'acceptation d'une transaction d'appropriation donnée, l'acception d'une transaction d'appropriation subséquente est interdite jusqu'après l'acception d'une transaction de désappropriation.

4. Procédé selon la revendication 3, dans lequel, suite à l'acceptation de la transaction de désappropriation, le dispositif électronique (2) se voit interdire d'utiliser ladite au moins une clé de dispositif (62) fournie en réponse à ladite transaction d'appropriation donnée ou à une transaction d'appropriation précédente pour le chiffrement ou le déchiffrement de données ou de commandes ou permettant de prouver l'identité du dispositif électronique (2) jusqu'après l'acception de ladite transaction d'appropriation subséquente.

5. Procédé selon l'une quelconque des revendications 3 et 4, dans lequel l'acceptation de la transaction de désappropriation est fonction de la fourniture :
d'informations renvoyées par le dispositif électronique (2) en réponse à ladite transaction d'appropriation donnée ; et/ou
d'informations permettant de prouver qu'une partie prenante lançant la transaction de désappropriation est la partie prenant ayant lancé ladite transaction d'appropriation donnée.

6. Programme d'ordinateur destiné à commander à un dispositif électronique (2) de réaliser le procédé selon l'une quelconque des revendications précédentes.

7. Support d'enregistrement dans lequel est enregistré le programme d'ordinateur selon la revendication 6.

8. Dispositif électronique (2), comprenant une circuiterie configurée pour :
fournir, en réponse à l'acceptation d'une transaction d'appropriation lancée par une partie prenante établissant une nouvelle identité cryptographique, dans le dispositif électronique (2), au moins une clé de dispositif (62) pour le chiffrement ou le déchiffrement de données ou de commandes ou permettant de prouver l'identité du dispositif électronique (2), en accord avec la nouvelle identité cryptographique, l'identité cryptographique étant représentée par l'au moins une clé de dispositif (62), et l'acceptation de la transaction d'appropriation étant fonction de la fourniture, par la partie prenante, d'un jeton de transfert déduit d'une transaction précédente réalisée sur le dispositif électronique (2) par une partie prenante précédente ayant établi une identité cryptographique précédente dans la chaîne d'identités cryptographiques ; et
télécharger en amont, vers un registre comptable public (64) permettant le suivi d'une chaîne d'identités cryptographiques établies pour ledit dispositif électronique (2), des informations indiquant une identité de la partie prenante établissant la nouvelle identité cryptographique pour le dispositif électronique (2) et un ordre dans lequel la nouvelle identité cryptographique a été établie par rapport à d'autres identités cryptographiques dans ladite chaîne,
en réponse à l'acceptation de la transaction d'appropriation, des données liant des informations d'identité indiquant l'identité de la partie prenant au jeton de transfert étant téléchargées en amont vers le registre comptable public (64), et
le dispositif électronique (2) étant configuré pour tenir à jour un compteur permettant le suivi d'un nombre de transactions acceptées par le dispositif électronique (2) pour l'établissement de la chaîne d'identités cryptographiques, et les données téléchargées en amont vers le registre comptable public (64) en réponse à l'acceptation de la transaction d'appropriation comprenant au moins :
une première valeur fonction du jeton de transfert et d'une valeur donnée dudit compteur ; et
une deuxième valeur fonction des informations d'identité et d'une valeur suivante dudit compteur.

9. Dispositif électronique (2) selon la revendication 8, comprenant en outre une circuiterie configurée pour amener le dispositif électronique (2) à réaliser le procédé selon l'une quelconque des revendications 2 à 5.
